# EUROPÄISCHE PATENTSCHRIFT

(11) **EP 1 107 896 B1**
(45) Veröffentlichungstag und Bekanntmachung des Hinweises auf die Patenterteilung: **29.10.2003**
(21) Anmeldenummer: 99946036.3
(22) Anmeldetag: 26.08.1999
(51) Int. Cl.: B60T 8/40, F04B 17/03

(54) **MOTOR-PUMPEN-AGGREGAT**
MOTOR-PUMP ASSEMBLY
ENSEMBLE MOTEUR-POMPE

(30) Priorität: 02.09.1998 DE 19840048
(43) Veröffentlichungstag der Anmeldung: 20.06.2001
(73) Patentinhaber: Continental Teves AG & Co. oHG, 60488 Frankfurt (DE)
(72) Erfinder: BURGDORF, Jochen, D-63075 Offenbach (DE); DINKEL, Dieter, D-65817 Eppstein (DE); REINARTZ, Hans-Dieter, D-60439 Frankfurt am Main (DE)
(86) Internationale Anmeldenummer: EP9906278
(87) Internationale Veröffentlichungsnummer: WO00013951

(56) Entgegenhaltungen:
- EP-A- 0 566 067
- EP-A- 0 699 836
- WO-A-90/03520
- WO-A-94/10469
- DE-A- 19 632 167
- PATENT ABSTRACTS OF JAPAN vol. 018, no. 196 (M-1589), 6. April 1994 (1994-04-06) -& JP 06 002649 A (SUMITOMO ELECTRIC IND LTD), 11. Januar 1994 (1994-01-11)
- PATENT ABSTRACTS OF JAPAN vol. 018, no. 534 (M-1685), 11. Oktober 1994 (1994-10-11) -& JP 06 185454 A (SUMITOMO ELECTRIC IND LTD), 5. Juli 1994 (1994-07-05)

## Beschreibung

Die Erfindung betrifft ein Motor-Pumpen-Aggregat nach dem Oberbegriff des Patentanspruchs 1.

Aus der deutschen Offenlegungsschrift DE 196 32 167 A1 ist ein gattungsgemäßes Aggregat bekannt, das einen Elektromotor und eine Kolbenpumpe umfaßt, die z.B. zur Verwendung in einer ABS (Anti-Blockier-System), ASR (Antriebs-Schlupf-Regelung) oder ESP (Elektronisches Stabilitäts-Programm) - Anlage einer geregelten Fahrzeugbremse geeignet sind, wobei Kolben der Pumpe über einen Exzenter antreibbar sind. Gemäß dieser Druckschrift sind eine Antriebswelle des Elektromotors und eine Stützachse der Kolbenpumpe separat ausgebildet. Ferner ist auf der Stützachse ein mit einem exzentrischen Zwischenring versehenes Exzenterlager angeordnet. Der exzentrische Zwischenring weist jedoch eine ungleichmäßige Masseverteilung auf, so daß bei der Nutzung eines derartigen Exzenters in einem Motor-Pumpen-Aggregat eine Unwucht auftritt, die im Betrieb unerwünschte Geräusche erzeugt und die jeweiligen Lager sowie die Stützachse und das Pumpengehäuse, in der die Stützachse angeordnet ist, sehr stark belastet.

Der WO 90/03520 ist ein Motor-Pumpenaggregat zu entnehmen, wobei eine Antriebswelle eines Elektromotors sowie eine Stützachse für ein Exzenterlager einer Kolbenpumpe separat angeordnet sind, und mit planen Berührflächen aneinander anliegen. Ferner ist einem Exzenter ein Ausgleichsgewicht zugeordnet. Auch der DE 196 32 167 A1 sind plane Berührflächen zwischen einer Stützachse und einer Antriebswelle eines Elektromotors zu entnehmen.

Es ist deshalb Aufgabe der vorliegenden Erfindung, eine höhere Laufruhe, einen geringeren Verschleiß und geringere Belastung der Lager bzw. der Stützachse und des Pumpengehäuses zu ermöglichen.

Diese Aufgabe wird erfindungsgemäß durch die Merkmale des Anspruchs 1 gelöst.

Vorzugsweise ist dabei das Ausgleichsgewicht direkt oder unter Zwischenschaltung einer Hülse mit der Antriebswelle verbunden.

Mit Vorteil kann das Ausgleichsgewicht einstückig mit dem Zwischenring ausgebildet sein.

Alternativ dazu kann jedoch das Ausgleichsgewicht auch über die Hülse mit dem Zwischenring verbunden sein.

Vorzugsweise ist das Ausgleichsgewicht durch Sintern hergestellt und somit besonders leicht und einfach herzustellen.

Die vorliegende Erfindung wird anhand der folgenden Ausführungsbeispiele in Zusammenhang mit den zugehörigen Zeichnungen näher erläutert. Es zeigen:
- Fig. 1: ein aus dem Stand der Technik bekanntes Motor-Pumpen-Aggregat im Längsschnitt;
- Fig. 2: eine erste Ausführungsform des erfindungsgemäßen Aggregates im Schnitt;
- Fig. 3: eine zweite Ausführungsform des erfindungsgemäßen Aggregates, ebenfalls im Schnitt;
- Fig. 4: eine dritte Ausführungsform des erfindungsgemäßen Aggregates; und
- Fig. 5: eine weitere Ausführungsform des Motor-Pumpen-Aggregates gemäß der vorliegenden Erfindung.

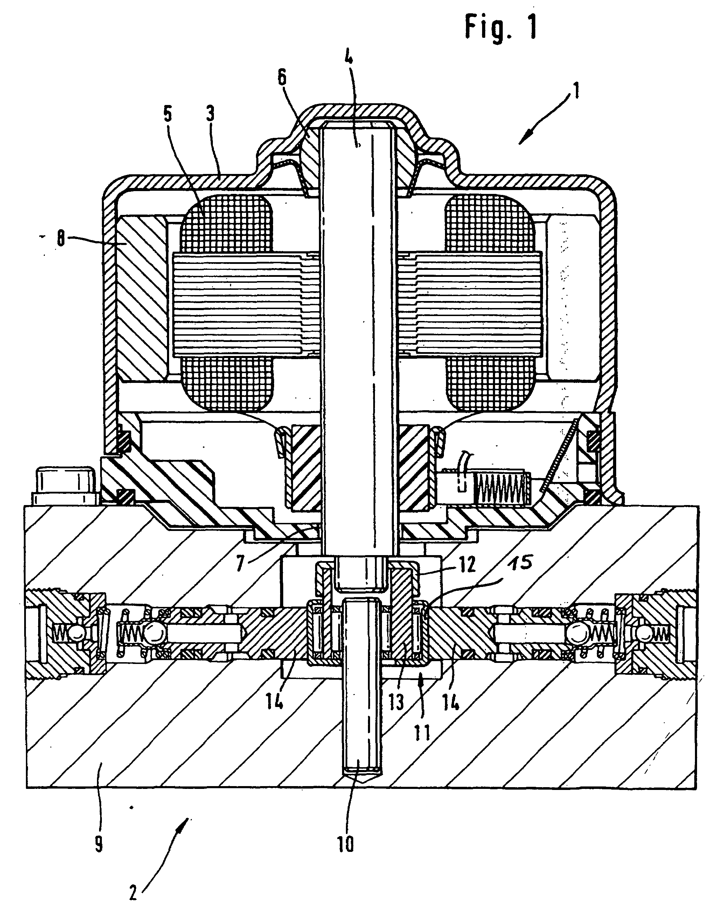

In Fig. 1, die ein bekanntes Motor-Pumpen-Aggregat, nach dem Stand der Technik zeigt, sind ein Elektromotor mit 1 und eine Kolbenpumpe mit 2 bezeichnet. Im Gehäuse 3 des Elektromotors 1 ist eine Antriebswelle 4, auf der ein Rotor 5 angeordnet ist, in einem oberen ersten Lager 6 und einem unteren zweiten Lager 7 gegenüber einem Stator 8 drehbar gelagert. Die Lager 6 und 7 sind bei diesem Beispiel als Gleitlager ausgeführt. Im Gehäuse 9 der Pumpe 2 ist eine Stützachse 10 befestigt, auf der ein Exzenterlager 11 angeordnet ist. Eine mit der Antriebswelle 4 verbundene Drehmomentübertragungshülse 12 überträgt ein Drehmoment von der Welle 4 auf einen als exzentrischen Zwischenring ausgebildeten Exzenter 13 des Exzenterlagers 11, wodurch Kolben 14 der Pumpe radial zur Antriebswelle 4 hin und her bewegt werden und so den, beispielsweise für den Betrieb einer ABS (Anti-Blockier-System), ASR (Antriebs-Schlupf-Regelung) oder ESP (Elektronisches Stabilitäts-Programm) -Anlage einer geregelten Fahrzeugbremse, erforderlichen Druck aufbauen. Die dabei auftretenden Reaktionskräfte werden über einen Außenring 15 des Exzenterlagers 11 und Nadelreihen direkt auf die Stützachse 10 und damit in das Gehäuse 9 der Kolbenpumpe 2 geleitet.

Wie bereits erwähnt, weist der Exzenter 13 eine ungleichmäßige Masseverteilung auf. Deshalb tritt bei der Nutzung eines derartigen Exzenters 13 bzw. Exzenterlagers 11 in einem Motor-Pumpen-Aggregat insbesondere aufgrund des großen Außendurchmessers des Exzenters 13 eine Unwucht auf, die im Betrieb unerwünschte Geräusche erzeugt und die jeweiligen Lager 6 und 7 und insbesondere die Stützachse 10 und das Pumpengehäuse 2, in der die Stützachse 10 angeordnet ist, sehr stark belastet.

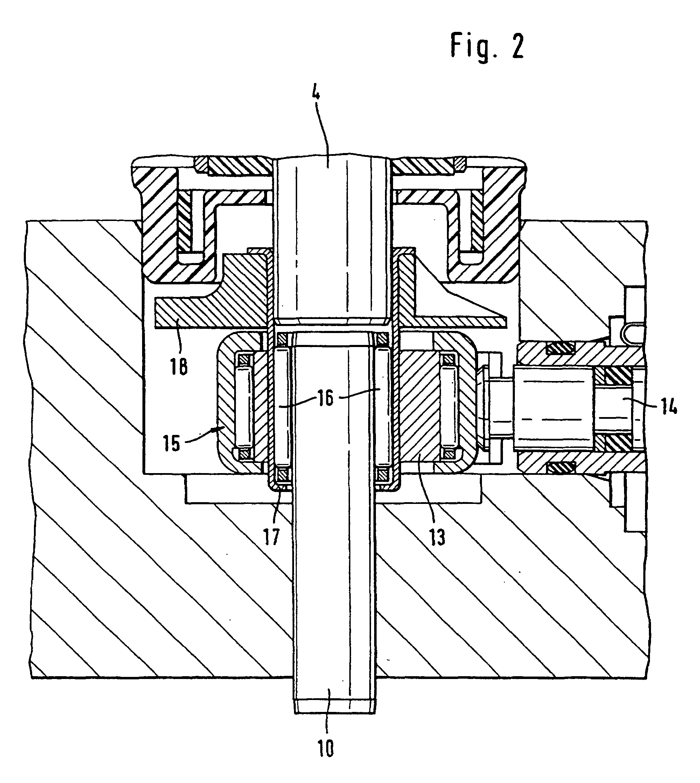

Die in den Fig. 2 bis 5 dargestellten Ausführungsbeïspiele der vorliegenden Erfindung beziehen sich auf ein oben beschriebenes Motor-Pumpen-Aggregat, so daß hiermit auf die Beschreibung von Fig. 1 jeweils vollinhaltlich Bezug genommen wird. Gleiche Bezugszeichen beschreiben identische oder zumindest ähnliche Bauteile.

Fig. 2 zeigt ein erstes Ausführungsbeispiel der vorliegenden Erfindung, bei dem erfindungsgemäß ein Ausgleichsgewicht 18 zum Ausgleich der durch den Exzenter 13 erzeugten Unwucht in dessen Nähe angeordnet ist. Damit ist sowohl eine dynamische als auch eine statische Auswuchtung mit hoher Güte gewährleistet. Der Exzenter 13 ist einfach, d.h. ohne besondere Vorsprünge, Verlängerungen etc. ausgebildet. Auf dem Exzenter 13 läuft über äußere Nadeln ein Außenring 15, der ein Widerlager für die Kolben 14 darstellt. Innere Nadeln 16 des Exzenterlagers 11 laufen an ihrer Innenseite auf der Stützachse 10 und an der Außenseite in einer Hülse 17, die vorzugsweise durch Ziehen oder Tiefziehen hergestellt ist. Die Drehmomentübertragung von der Antriebswelle 4 erfolgt vorzugsweise über Preßverbindungen zwischen der Welle 4 und der Hülse 17 bzw. zwischen der Hülse 17 und dem vorzugsweise als zwischenring ausgebildeten Exzenter 13. Der Ausgleich der Lager- und der Exzenterunwucht erfolgt mittels eines Ausgleichsgewichtes 18, das insbesondere durch Sintern hergestellt sein kann. Das Ausgleichsgewicht 18 ist vorzugsweise ebenfalls durch eine Preßverbindung mit der Hülse 17 verbunden. Hierdurch wird insbesondere auch die Verbindung zwischen Hülse 17 und Antriebswelle 4 unterstützt. Das Ausgleichsgewicht 18 weist vorzugsweise eine einfache Form auf und ist deshalb leicht und kostengünstig herzustellen.

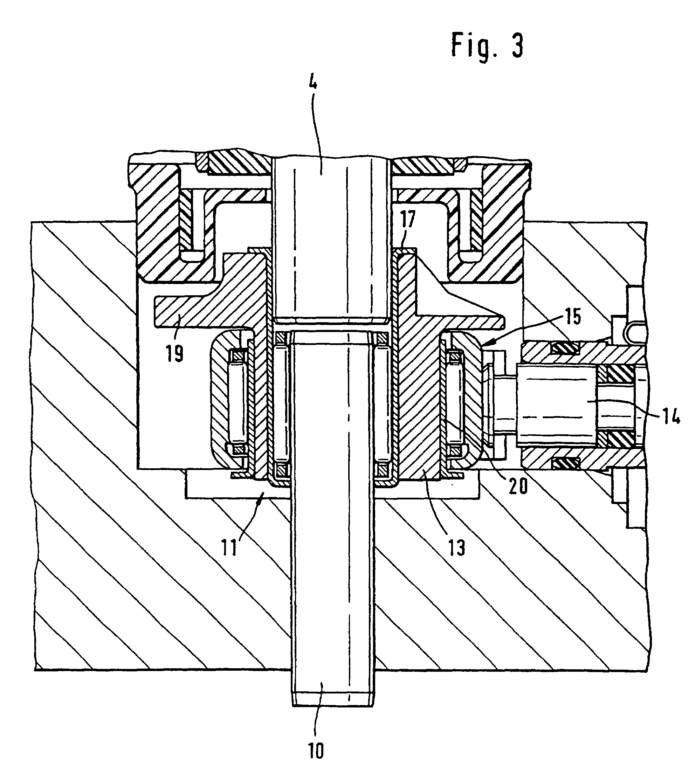

Fig. 3 zeigt eine zweite Ausführungsform der vorliegenden Erfindung im Schnitt. Hier ist das Ausgleichsgewicht 19 einstückig mit dem Exzenter 13 ausgebildet. Neben der bereits in Fig. 2 erwähnten Hülse 17 ist eine weitere Hülse 20 vorhanden, auf der der Außenring 15 bzw. das Exzenterlager 11 läuft. Die weitere Hülse 20 ist vorzugsweise auf den Exzenter 13 aufgepreßt. Dabei kann die Hülse 20 an einem Ende mit einem Vorsprung versehen sein, so daß sie gleichzeitig auch das Exzenterlager 11 in axialer Richtung bezogen auf die Antriebswelle 4 bzw. die Stützachse 10 fixiert.

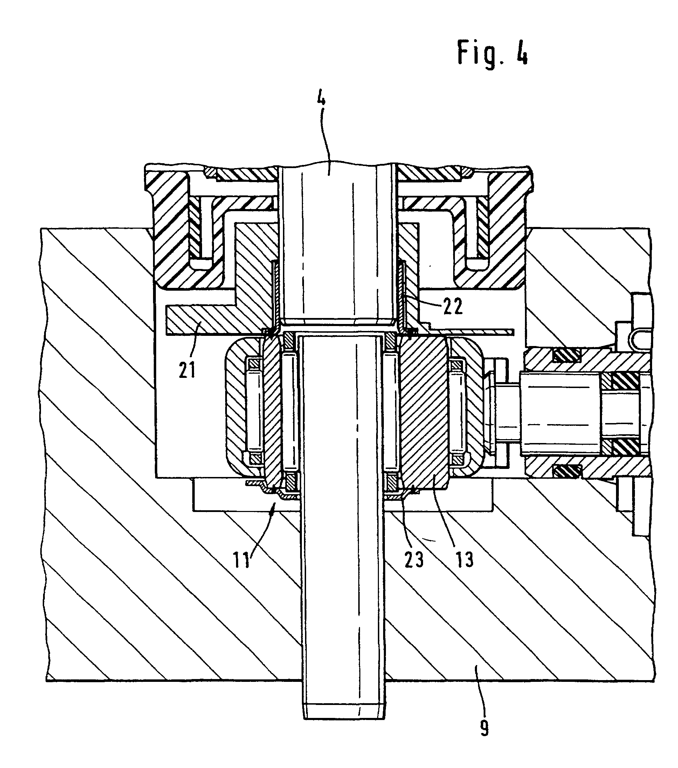

In Fig. 4 ist eine weitere Ausführungsform der vorliegenden Erfindung im Schnitt dargestellt. Wiederum ist erfindungsgemäß in der Nähe des Exzenters 13 zumindest ein Ausgleichsgewicht 21 vorgesehen, das in dieser Ausführungsform direkt auf die Antriebswelle 4 aufgepreßt ist und somit mit Vorteil unabhängig vom Exzenter 13 ausgebildet bzw. montiert werden kann. Die Antriebswelle 4 und der Exzenter 13 sind in dieser Ausführungsform mittels einer insbesondere angeschweißten Hülse 22 miteinander verbunden. Der axiale Anlauf für das innere und äußere Lager des Exzenters 13 in Richtung auf das Pumpengehäuses 9 erfolgt insbesondere unter Zwischenschaltung eines Bleches 23, das vorzugsweise durch Schweißen mit dem Zwischenring 13 verbunden ist. Durch das Blech 23 wird verhindert, daß der Exzenter 13 gegen das Pumpengehäuse 9 stößt und verschleißt.

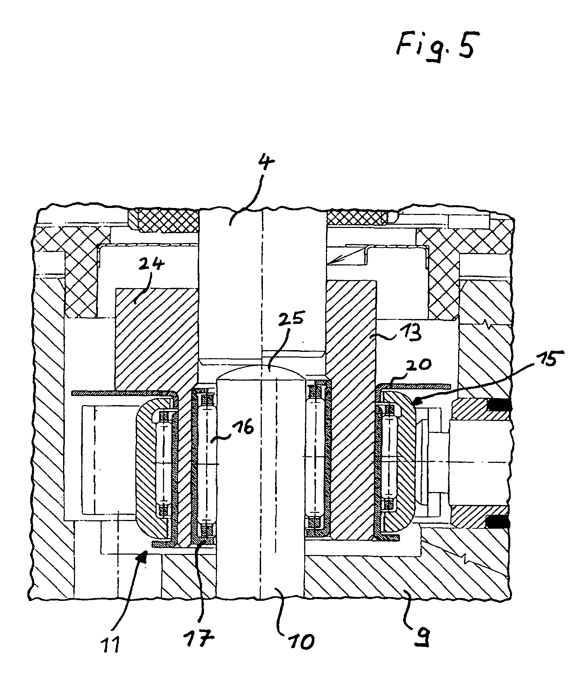

Fig. 5 zeigt in einer Schnittansicht eine weitere und bevorzugte Ausführungsform der vorliegenden Erfindung. Ähnlich zu Fig. 3 ist ein Ausgleichsgewicht 24 einstückig mit dem Exzenter 13 ausgebildet. Dieses Ausgleichsgewicht 24 weist zwar etwas schlechtere Eigenschaften bezüglich der dynamischen Auswuchtung auf, ist jedoch wesentlich einfacher herzustellen als das Ausgleichsgewicht 19 von Fig. 3. Neben der Hülse 17 ist die weitere Hülse 20 vorhanden, auf der über die äußeren Nadeln der Außenring 15 bzw. das Widerlager läuft. In dieser Ausführungsform ist die Hülse 20 an beiden Enden mit jeweils einem radial nach außen gerichteten Vorsprung versehen sein, so daß sie gleichzeitig auch das Exzenterlager 11 in axialer Richtung bezogen auf die Antriebswelle 4 bzw. die Stützachse 10 fixiert:. Um das Exzenterlager 11 einfacher montieren zu können, ist die Hülse 20 in dieser Ausführungsform zweigeteilt. Ebenfalls zur axialen Fixierung der inneren Nadeln 16 kann die Hülse 17 an ihren Enden nach innen gerichtete Vorsprünge aufweisen.

Beim Anlauf des Elektromotors 1 und damit der Antriebswelle 4 kann es zu einer axialen Verschiebung der Antriebswelle 4 in Richtung auf die Stützachse 10 kommen, wie dies in der linken Hälfte von Fig. 5 dargestellt ist. Um hierbei den Verschleiß und die auftretende Reibung zu verringern, kann das entsprechende Ende 25 der Stützachse 10 abgerundet ausgebildet sein. Dies ist bei allen Ausführungsbeispielen der vorliegenden Erfindung möglich.

## Patentansprüche

1. Motor-Pumpen-Aggregat mit einem Elektromotor (1) und einer Kolbenpumpe (2), insbesondere für schlupfgeregelte Bremsanlagen von Kraftfahrzeugen, wobei Kolben (14) der Pumpe (2) über einen Exzenter (13) antreibbar sind, und die Antriebswelle (4) des Elektromotors (1) sowie eine Stützachse (10) der Kolbenpumpe (2) separat ausgebildet sind, wobei auf der Stützachse (10) ein Exzenterlager (11) angeordnet ist, und dem Exzenter (13) zumindest ein Ausgleichsgewicht (18, 19, 21, 24) zugeordnet ist, **dadurch gekennzeichnet, daß** die Stützachse (10) an ihrem zur Antriebswelle (4) hin gerichteten Ende (25) abgerundet ausgebildet ist.

2. Motor-Pumpen-Aggregat nach Anspruch 1, **dadurch gekennzeichnet, daß** der Exzenter (13) als Zwischenring des Exzenterlagers (11) ausgebildet ist, und dass der Zwischenring mit der Antriebswelle (4) verbunden ist.

3. Aggregat nach Anspruch 1, **dadurch gekennzeichnet, daß** das Ausgleichsgewicht (18, 19, 21, 24) direkt oder unter Zwischenschaltung einer Hülse (17, 22) mit der Antriebswelle (4) verbunden ist.

4. Aggregat nach Anspruch 2, **dadurch gekennzeichnet, daß** das Ausgleichsgewicht (19, 24) einstückig mit dem Zwischenring ausgebildet ist.

5. Aggregat nach Anspruch 2 und 3, **dadurch gekennzeichnet, daß** das Ausgleichsgewicht (18, 21) über die Hülse (17, 22) mit dem Zwischenring verbunden ist.

6. Aggregat nach Anspruch 1, **dadurch gekennzeichnet, daß** das Ausgleichsgewicht (18, 19, 21, 24) durch Sintern hergestellt ist.

## Claims

1. Motor-and-pump assembly including an electric motor (1) and a piston pump (2), in particular for slip-controlled brake systems of automotive vehicles, wherein pistons (14) of the pump (2) are adapted to be driven by an eccentric (13), and the drive shaft (4) of the electric motor (1) and a support axle (10) of the piston pump (2) are separately designed, and wherein an eccentric bearing (11) is arranged on the support axle (10), and at least one counterbalance weight (18, 19, 21, 24) is associated with the eccentric (13),
**characterized in that** the support axle (10) at its end (25) directed to the drive shaft (4) has a rounded design.

2. Motor-and-pump assembly as claimed in claim 1,
**characterized in that** the eccentric (13) is designed as an intermediate ring of the eccentric bearing (11), and that the intermediate ring is connected to the drive shaft (4).

3. Assembly as claimed in claim 1,
**characterized in that** the counterbalance weight (18, 19, 21, 24) is connected to the drive shaft (4) directly or indirectly by the intermediary of a sleeve (17, 22).

4. Assembly as claimed in claim 2,
**characterized in that** the counterbalance weight (19, 24) is designed integrally with the intermediate ring.

5. Assembly as claimed in claims 2 and 3,
**characterized in that** the counterbalance weight (18, 21) is connected to the intermediate ring by way of the sleeve (17, 22).

6. Assembly as claimed in claim 1,
**characterized in that** the counterbalance weight (18, 19, 21, 24) is sintered.

## Revendications

1. Groupe moteur-pompe comportant un moteur électrique (1) et une pompe à pistons (2), en particulier pour systèmes de freinage à régulation du glissement de véhicules automobiles, dans lequel des pistons (14) de la pompe (2) peuvent être entraînés par un excentrique (13), et l'arbre moteur (4) du moteur électrique (1) ainsi qu'un axe d'appui (10) de la pompe à pistons (2) sont réalisés séparément, dans lequel sur l'axe d'appui (10) est disposé un palier d'excentrique (11), et à l'excentrique (13) est associé au moins un poids d'équilibrage (18, 19, 21, 24), **caractérisé en ce que** l'axe d'appui (10) est réalisé arrondi à son extrémité (25) dirigée vers l'arbre moteur (4).

2. Groupe moteur-pompe selon la revendication 1, **caractérisé en ce que** l'excentrique (13) est réalisé sous la forme d'une bague intermédiaire du palier d'excentrique (11), et **en ce que** la bague intermédiaire est reliée à l'arbre moteur (4).

3. Groupe selon la revendication 1, **caractérisé en ce que** le poids d'équilibrage (18, 19, 21, 24) est relié directement ou par interposition d'une douille (17, 22) à l'arbre moteur (4).

4. Groupe selon la revendication 2, **caractérisé en ce que** le poids d'équilibrage (19, 24) est réalisé d'un seul tenant avec la bague intermédiaire.

5. Groupe selon les revendications 2 et 3, **caractérisé en ce que** le poids d'équilibrage (18, 21) est relié à travers la douille (17, 22) à la bague intermédiaire.

6. Groupe selon la revendication 1, **caractérisé en ce que** le poids d'équilibrage (18, 19, 2, 24) est réalisé par frittage.
